# EUROPÄISCHE PATENTANMELDUNG

(11) **EP 1 980 679 A2**
(43) Veröffentlichungstag der Anmeldung: **15.10.2008**
(21) Anmeldenummer: 08103200.5
(22) Anmeldetag: 31.03.2008
(51) Int. Cl.: E04B 2/00, E04C 1/39, F24J 2/00

(54) **Außenwand eines Gebäudes, mit einem Mauerwerksverband aus Mauersteinen, und Verfahren zur Herstellung der Mauersteine**

(30) Priorität: 05.04.2007 DE 102007016798
(71) Anmelder: AKA Ziegelgruppe GmbH, 31226 Peine (DE)
(72) Erfinder: Arntjen, Claus, 67157 Wachenheim (DE)
(74) Vertreter: Einsel, Martin

(57) **Zusammenfassung**

Ein Mauerstein (20) besitzt eine Oberseite (21), eine Unterseite (22), zwei Schmalseiten (25, 26), eine Rückseite (24) und eine Kopfseite (23). Der erfindungsgemäße Mauerstein ist ein Verblendmauerstein, beispielsweise ein Ziegelstein oder Klinker, und weist eine Ausnehmung (30) auf in der eine Rohrleitung (31) angeordnet ist, die für ein Fluid durchströmbar ist. Die Ausnehmung besitzt bevorzugt die Form einer Rinne und ist parallel zur Kopfseite horizontal in der Oberseite des Verblendmauersteins eingeformt, so dass mit diesem eine Außenwand eines Gebäudes (10) aufgebaut werden kann, um durch Sonneneinstrahlung zur Verfügung stehende Energie in dem Fluid einer Wärmetauscheinrichtung zuzuführen.

## Beschreibung

Die Erfindung betrifft eine Außenwand eines Gebäudes, mit einem Mauerwerksverband, welcher Mauerwerksverband aus überwiegend identisch ausgebildeten Mauersteinen mit jeweils einer Oberseite, mit jeweils einer Unterseite, mit jeweils zwei Schmalseiten, mit jeweils einer Rückseite, und mit jeweils einer Kopfseite aufgebaut ist, wobei ein Teil der Mauersteine jeweils eine Ausnehmung in Form einer Rinne besitzt, die parallel zur Kopfseite horizontal in der Oberseite des Mauersteins ausgebildet ist, wobei nebeneinanderliegende Mauersteine des Mauerwerksverbandes so aufeinander ausgerichtet sind, dass die Ausnehmungen in Form der Rinnen aneinander anschließen, wobei in den überwiegend identisch ausgebildeten Mauersteinen Rohrleitungen in die aufeinander ausgerichteten Rinnen der Ausnehmungen nebeneinanderliegender Mauersteine eingelegt sind, wobei in den Rohrleitungen ein Fluid strömen kann, Sie betrifft außerdem ein Verfahren zur Herstellung derartiger Mauersteine.

Mauersteine sind beispielsweise Ziegelsteine, aber auch Klinker, Kalksandsteine und andere Arten von insbesondere maschinell hergestellten Steinen. Sie sind im Regelfall quaderförmig und werden ihrerseits zum Aufbau eines Mauerwerksverbandes eingesetzt. Diese Mauerwerksverbände werden zum Aufbau insbesondere von Gebäuden genutzt und bilden dort die Wände dieser Gebäude beziehungsweise Häuser.

Dabei gibt es Verblendmauersteine, die weniger für die tragenden Eigenschaften einer Wand eines Gebäudes verantwortlich sind, sondern die sichtbare Außenseite des Gebäudes bilden und daher unter anderem optischen Ansprüchen genügen müssen, und es gibt für das nicht sichtbare Hintermauerwerk verwendete Mauersteine, die vor allem die statischen Anforderungen für das Gebäude erfüllen müssen. Die Mauersteine haben darüber hinaus die Aufgabe, Regen, Schnee und andere äußere Feuchtigkeit, Wind und andere Umwelteinflüsse daran zu hindern, in das Haus einzudringen.

Nach einem gattungsgemäßen Vorschlag aus der DE 25 08 020 A1 kann in einem Hintermauerwerk vorgesehen werden, horizontal verlaufende, innenliegende Kanäle zur späteren Aufnahme von Installationsleitungen vorzusehen. Diese zunächst leerbleibenden Installationskanäle können dann später von der Innenseite des Gebäudes aus aufgefunden, angebohrt und zur Verlegung elektrischer Leitungen genutzt werden.

Die Außenwände des Gebäudes haben auch den Effekt, die in der Umgebung herrschenden Temperaturen an einem Eindringen in das Gebäude zu hindern, also eine gewisse Wärmedämmung des Hauses herbeizuführen. Sie halten also die Innenräume des Gebäudes über eine gewisse Zeit relativ kühl, wenn es draußen heiß ist, und sie halten die künstlich erzeugte Wärme im Haus, wenn es draußen kältere Temperaturen gibt.

Um diesen Wärmedämmungseffekt zu verbessern, werden beispielsweise Dämmschichten auf der Innenseite der Außenwände angebracht. Aus der DE 44 21 654 A1 ist in diesem Zusammenhang ein Vorschlag bekannt, durch speziell ausgebildete Auskragungen und Rücksprünge an den einzelnen Mauersteinen eine besonders stabile Verzahnung der Mauersteine eines Mauerwerksverbandes miteinander zu schaffen, um den Mauerwerksverband zugunsten des Dämmmaterials mit einer geringeren Dicke ausführen zu können.

Als weiterer Vorschlag zur Unterstützung der Wärmedämmung wird in der DE 30 11 289 A1 vorgeschlagen, von der sichtbaren Außenseite des Gebäudes aus vor die Mörtelfugen Rohre zu legen. Auf diese Weise soll die durch die Mörtelschichten und die Gebäudewand von innen nach außen durchströmende Wärme vor Erreichen der äußeren Wandoberfläche diese Rohre erreichen und dort von einem kanalisiert flüssigen oder gasförmigen Zwischenmedium aufgenommen und zur Wärmerückgewinnung genutzt werden.

Um die Rohre zu halten, werden die Mauersteine der äußersten Schicht mit außenliegenden Vorsprüngen oder Rücksprüngen oder Nocken ausgerüstet, in die auch nachträglich von außen die Rohrleitungen eingedrückt werden können.

Diese Konzeption hat allerdings den erheblichen Nachteil, dass sie zum Einen die optisch sichtbare Außenseite des Gebäudes stark beeinträchtigt und zum Anderen die Rohre mit dem Zwischenmedium der äußeren Witterung in vollem Umfange aussetzt. Der Vorschlag ist aufgrund dieser erheblichen Nachteile daher auch nicht in die Praxis umgesetzt worden.

Die Heizung und Klimatisierung von Innenräumen von Gebäuden ist ebenfalls schon seit langer Zeit ein Thema. Schon seit mehr als zwei Jahrtausenden gibt es für diesen Zweck sogenannte Fußbodenheizungen, bei denen unter dem Fußboden eines Raumes Wasserleitungen verlegt werden, durch die bei Bedarf warmes oder kaltes Wasser strömen kann, das dann durch Wärmeübertragung in den darüber liegenden Innenraum des Gebäudes dort zu einer Erwärmung oder Klimatisierung führt.

Diese sehr erfolgreiche Konzeption ist in funktionell verwandter, wenn auch konstruktiv veränderter Form auch schon für Außenwände von Gebäuden vorgeschlagen worden. So wird bereits in der US-PS 3,299,795 vorgeschlagen, Leitungen vertikal durch das Mauerwerk eines Gebäudes zu legen und dabei durch diese Leitungen keine Flüssigkeit, sondern heiße oder kalte Luft zu führen. Die Erwärmung oder Abkühlung in den Innenräumen des Gebäudes soll auf diese Weise durch Wärmestrahlung aus der Wand in diese Innenräume beziehungsweise umgekehrt erfolgen, wobei Konvektion und unerwünschte Zugluft vermieden werden sollen.

Die DE 41 24 982 C2 greift einen ähnlichen Gedanken auf und schlägt den Einsatz hohlkörperartiger Bauteile vor, um ein flächenhaftes Netzwerk von Rohrkörpern in einer Wand für ein Klimatisierungssystem für den benachbarten Innenraum eines Gebäudes aufzubauen.

Ein weiterer Vorschlag in dieser Richtung ist aus der DE 198 19 230 C2 bekannt. Hier werden Ziegelsteine für ein Hintermauerwerk verwendet, die Schlitze oder Durchgangsbohrungen aufweisen. In diesen Schlitzen oder Durchgangsbohrungen befinden sich Rohre, die von einem Fluid durchströmt werden können. Die Rohre bilden auf diese Weise eine Heizeinrichtung für den benachbarten Innenraum des Gebäudes, in dem die Wärme des Fluides dorthin übertragen wird.

Auch in der DE 10 2005 010 266 A1 wird für einen ähnlichen Zweck ein Ziegelstein für das Hintermauerwerk einer Außenwand vorgeschlagen, der aus unterschiedlichen, in dieser Druckschrift als vorteilhaft beschriebenen Materialzusammensetzungen aufgebaut sein soll.

Alle zuletzt erwähnten Vorschläge aus dem Stand der Technik mit Durchbohrungen, Kanälen, Rinnen oder dergleichen in Ziegel- oder anderen Mauersteinen dienen zu Heiz- oder Klimatisierungszwecken des unmittelbar angrenzenden Innenraums des Gebäudes. Wesentlich bei allen erwähnten Vorschlägen ist eine sehr intensive Wärmedämmung dieser Leitungen gegenüber dem Außenraum, um eine Wärmeleitung oder Wärmeabstrahlung und damit eine Wärmeausbreitung in die Umgebung und damit in eine nicht beabsichtigte Richtung zu verhindern.

Trotz dieser interessanten Vorschläge aus dem Stand der Technik besteht unverändert Bedarf an alternativen Möglichkeiten für einen energetisch sinnvollen Aufbau von Außenwänden eines Gebäudes mit Mauersteinen.

Eine erste Aufgabe der Erfindung ist es daher, eine Außenwand mit Mauersteinen vorzuschlagen, die durch ihre Ausgestaltung einen energetisch sinnvollen Einsatz ermöglicht. Eine weitere Aufgabe besteht darin, ein Verfahren zur Herstellung eines derartigen Mauersteins vorzuschlagen.

Die erstgenannte Aufgabe wird erfindungsgemäß bei einer gattungsgemäßen Außenwand dadurch gelöst, dass die Außenwand der Sonneneinstrahlung zugewandt ist, dass die Mauersteine Verblendmauersteine sind, dass eine Wärmetauscheinrichtung vorgesehen ist, und dass die Rohrleitungen in den Ausnehmungen der Mauersteine so miteinander verbunden sind, dass das in ihnen strömende Fluid der Wärmetauscheinrichtung zugeführt wird.

Die zweite Aufgabe wird gelöst durch ein Verfahren zur Herstellung eines Mauersteins für eine derartige Außenwand, das sich dadurch auszeichnet, dass in einer Extrusionsanlage durch Strangpressung ein Strang eines Werkstoffes zur Herstellung von Mauersteinen extrudiert wird, dass in den Strang im rechten Winkel zur Förderrichtung des Stranges nach dem Austreten aus einem Mundstück durchgehende Ausnehmungen eingeformt werden, und dass der Strang des für die Herstellung von Mauersteinen verwendeten Werkstoffes vor oder nach dem Einfügen der Ausnehmungen senkrecht zur Förderrichtung benachbart zu den Ausnehmungen geschnitten wird.

Durch diese Erfindung wird eine gänzlich neuartige und auf einer ganz anderen Grundlage beruhende Möglichkeit für einen energetisch sinnvollen Einsatz von Mauersteinen geschaffen.

Wie erwähnt, besitzen Mauersteine, beispielsweise Ziegelsteine wie auch andere Verblendmauersteine wie beispielsweise Klinker oder Verblendklinker, unter anderem die Aufgabe, bei starker Sonneneinstrahlung eine nicht gewünschte Aufheizung der Innenräume von Gebäuden zu vermeiden. Die gleichwohl durch eine Sonneneinstrahlung auf die mit den Ziegelsteinen oder Verblendmauersteinen aufgebaute Außenwand in eben diese Außenwand eingebrachte unerwünschte Wärmeenergie wird bisher im Verblendmauerstein gespeichert und nicht in das Hintermauerwerk weitergegeben. Sie wird mit der Zeit wieder nach außen abgegeben oder in den Boden abgeführt.

Die Erfindung macht nun Gebrauch davon, diese nach der Sonneneinstrahlung im Mauerwerk vorhandene und bisher sehr unerwünschte Wärmeenergie zu nutzen. Zu diesem Zweck wird die aus den Ziegelsteinen oder anderen Verblendmauersteinen aufgebaute Außenmauer des Gebäudes mit einem Fluid, insbesondere Flüssigkeit, führenden Netzwerk ausgestattet. Die auf die Verblendmauersteine auftreffende Wärmeenergie wird nun an dieses in der Außenmauer geführte Fluid beziehungsweise an die Flüssigkeit abgegeben. Dieses strömende Fluid beziehungsweise diese Flüssigkeit führt diese Wärme dann einem geeigneten Wärmetauscher zu, der sie entsprechend umwandelt, speichert oder sonst nutzt.

Das erfindungsgemäße Konzept unterscheidet sich damit vollständig von so genannten Fußbodenheizungen, schon durch die Umkehr des Funktionsprinzips, ebenso aber auch durch den konstruktiven Aufbau und die Funktion.

Während bei in der Wand vorgesehenen Heizungen eine warme oder kalte Flüssigkeit strömt, um einen Innenraum zu beheizen, wird hier eine Aufheizung einer strömenden Flüssigkeit durch eine von außen zur Verfügung stehende Energiequelle durchgeführt, nämlich durch die Wärmeenergie, die durch Sonneneinstrahlung auf eine entsprechende Hauswand zur Verfügung steht. Von besonderem Nutzen ist natürlich dieses Konzept bei Hauswänden, die in Südrichtung stehen oder jedenfalls in einer geographischen Orientierung, die eine erhebliche Sonneneinstrahlung nutzen kann.

Während bei herkömmlichen, eingangs beschriebenen, in einer Wand befindlichen Heizungen etwa aus der DE 198 19 230 C2 oder auch bei vorbereiteten Kanälen für elektrische Installationsleitungen etwa nach der DE 25 08 020 A1 die Mauersteine des Hintermauerwerks entsprechend bearbeitet sind, da diese den Innenräumen benachbart sind, wird hier im Gegensatz dazu vorgeschlagen, Mauersteine des Verblendmauerwerks mit Ausnehmungen und Rinnen zu versehen, die Leitungen bilden oder aufnehmen können.

Dabei werden gleichzeitig die Nachteile aus der DE 30 11 289 A1 vollständig vermieden, da die Außenseite des Gebäudes mit der wichtigen auch und gerade optischen Funktion nicht beeinträchtigt wird. Die erfindungsgemäße Konzeption dient auch einem vollständig anderen Zweck, da nicht etwa versucht wird, von Innen nach Außen die Wärmedämmung durchdringende Wärmeströme aufzufangen, was ohnehin Bedenken hinsichtlich der Effektivität und der technischen Brauchbarkeit begegnet, sondern es wird eine bisher ungenutzte Energiequelle in Form der Sonneneinstrahlung genutzt.

Darüber hinaus entsteht der Vorteil, dass die Rohrleitungen in den Rinnen gegenüber dem Außenraum vollständig geschützt sind und damit weder Alterungsproblemen durch die Sonneneinstrahlung, noch mechanischen Gefahren durch Wind oder Hagel und schließlich auch keinen Gefahren durch Vandalismus ausgesetzt sind.

Ein besonders effektiv aufgebautes Netzwerk für diese Flüssigkeit entsteht dann, wenn die Verblendmauersteine in ihrer fertig eingemauerten Position eine möglichst außenwandnahe und parallel zur Außenwand laufende horizontale Rinne in ihrer Oberseite besitzen. Da erfindungsgemäß alle Ziegelsteine damit ausgestattet sind, lassen sich diese Rinnen mit einem geeigneten, für das Fluid oder die Flüssigkeit dichten Rohrmaterial über die gesamte Breite einer Hausfront linear nutzen und an den Hausecken durch geeignete Umleitungen dann mehrere übereinander laufende derartige lineare Strecken mäanderförmig oder in anderer geeigneter Form zusammenführen.

Als besonders effektiv hat es sich herausgestellt, wenn die in den mehreren in übereinanderliegenden Reihen von Mauersteinen angeordneten Rohrleitungen mäanderförmig miteinander verbunden sind.

Damit die Rinne in den Verblendmauersteinen in der gewünschten Position in dieser Form eingebracht werden kann, wird sie während des Herstellungsprozesses des Verblendmauersteines in die zu vermauernde Fläche eingebracht.

Bei einem Fertigungsverfahren der Verblendmauersteine in Extrusionsanlagen durch Strangpressung wird die Rinne im rechten Winkel zur Förderrichtung des Stranges nach dem Austreten aus einem Mundstück beim Strangpressen eingebracht.

Bei einer bevorzugten Form dieses Vorgehens werden Dorne vorgesehen, die von der Seite in die noch weiche Ziegelsteinmasse eintreten und die Rinne dabei herausschneiden.

Die Mauersteine für die erfindungsgemäße Außenwand haben darüber hinaus den Vorzug, die exakt identischen Abmessungen wie herkömmliche Mauersteine zu besitzen. Es ist also möglich, etwaige Überstücke oder Reststeine ohne Weiteres mit herkömmlichen Mauersteinen gemeinsam zu vermauern. Dies ist vor allem deshalb interessant, weil bei dem Aufbau eines kompletten Gebäudes das Vorsehen der erfindungsgemäßen Leitungen in den Ausnehmungen der Mauersteine nur auf den tatsächlich der Sonneneinstrahlung ausgesetzten Seiten des Gebäudes energetisch von nennenswertem Vorteil ist. Die Nordseite eines Gebäudes beispielsweise könnte mit herkömmlichen Mauersteinen aufgebaut werden. Optisch von außen besteht für den Betrachter kein Unterschied. Beim Transport der Mauersteine zur Baustelle ist es daher von großem Vorteil, dass auch eine aufgerundete Anzahl von erfindungsgemäßen Mauersteinen angeliefert werden kann, ohne dass beim Vermauern übrig bleibende Teile der üblicherweise palettenweise angelieferten Mauersteine verworfen werden müssen.

Um ein Zusammenführen der Leitungen aus verschiedenen übereinander liegenden Reihen von Mauersteinen eines Mauerwerksverbandes zu ermöglichen, werden für die Hausecken entsprechende Spezialsteine vorgesehen. Diese werden in einer vergleichsweise geringen Zahl benötigt, so dass der dafür erforderliche Kostenaufwand ebenfalls vertretbar ist.

Energetisch interessant ist noch ein weiterer Nebeneffekt, der bei dem Einsatz der erfindungsgemäßen Mauersteine entsteht. So war eingangs bereits erörtert worden, dass eine der Aufgaben des Verblendmauerwerks darin besteht, die bei der Sonneneinstrahlung eingekoppelte Wärme abzuführen, und zwar durch üblicherweise Abstrahlung nach außen oder durch Ableitung in den Boden, um eine Wärmeleitung ins Gebäudeinnere möglichst zu vermeiden.

Die erfindungsgemäße Konzeption führt nun nicht nur dazu, dass aus dieser Sonneneinstrahlung ein Teil der zur Verfügung gestellten Energie einem Nutzen zugeführt wird, sondern auch dazu, dass die Ableitung der eingekoppelten Wärmeenergie unterstützt wird. Derjenige Anteil der Wärmeenergie, der in die Fluide in den Leitungen in den Ausnehmungen aufgenommen und zum Wärmetauscher abgeführt wird, muss dann nicht noch zusätzlich in den Erdboden abgeleitet werden und es besteht auch kein Problem mehr damit, dass dieser Anteil der Wärmeenergie in das Gebäudeinnere durch die Außenwand hindurch gelangt.
Im Folgenden wird anhand der Zeichnung ein Ausführungsbeispiel der Erfindung näher beschrieben. Es zeigen:
- **Figur 1**: In schematischer Form eine Schnittdarstellung durch ein Gebäude;
- **Figur 2**: Eine schematische Darstellung eines erfindungsgemäßen Mauersteines; und
- **Figur 3**: Eine schematische Darstellung eines Herstellungsvorganges für erfindungsgemäße Mauersteine.

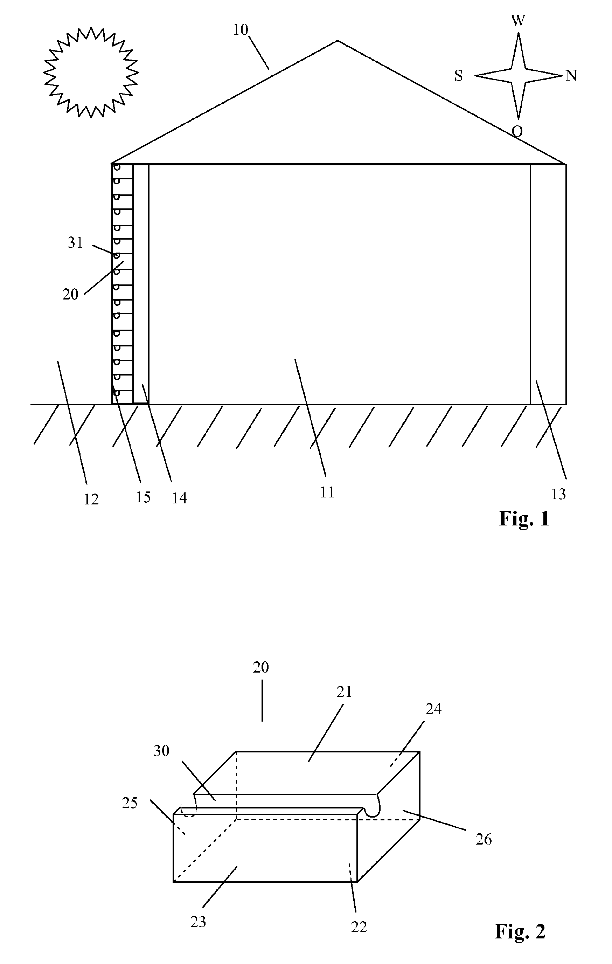

Das in der **Figur 1** dargestellte Gebäude 10 besitzt Innenräume 11. Die äußere Umgebung 12 zeichnet sich durch die üblichen klimatischen Möglichkeiten aus, also durch große Temperaturschwankungen, durch Winter und Sommer, durch Regen, Schnee und Hagel, durch Wind und durch Sonneneinstrahlung.

Die Innenräume 11 und die Umgebung 12 sind voneinander durch die Wand 13 des Gebäudes 10 getrennt. Die Wand 13 weist ein Hintermauerwerk 14 und ein Verblendmauerwerk 15 auf. Das Verblendmauerwerk 15 ist der Umgebung ausgesetzt und besteht aus optisch ansprechenden Mauersteinen 20. Das Hintermauerwerk 14 besteht ebenfalls aus Mauersteinen, die jedoch von außen nicht sichtbar sind und vor allem die statische Aufgabe in dem Gebäude 10 erfüllen.

In der Figur 1 sei angenommen, dass die dargestellte Wand 13 eine Südseite oder jedenfalls eine der Sonneneinstrahlung mehr oder weniger zugekehrte Seite des Gebäudes 10 bildet.

Das bedeutet, dass von außen auf das Verblendmauerwerk 15 der Wand 13 eine erhebliche Wärmeeinstrahlung erfolgt. Diese Wärmeeinstrahlung führt dazu, dass die Verblendmauersteine 20 diese Wärmeenergie aufnehmen.

Dies führte herkömmlich zu dem Problem, diese Wärmeenergie abzuleiten oder abzustrahlen, da sie insbesondere in der warmen oder heißen Jahreszeit im Innenraum 11 nicht gewünscht war, weshalb die Wand 13 insgesamt auch möglichst wärmeisolierend ausgebildet ist.

Erfindungsgemäß befinden sich nun in dem Verblendmauerwerk 15 Mauersteine 20 einer speziellen Ausgestaltungsform. Diese Ausgestaltungsform ist derart, dass Leitungen 31 durch das Verblendmauerwerk 15 führen. Diese Leitungen 31 führen ein Fluid, insbesondere eine frostgeschützte Flüssigkeit. Dieses Fluid in den Leitungen 31 kann in dem Verblendmauerwerk 15 mäanderförmig oder auch in parallelen Leitungssträngen oder in anderer geeigneter Form geführt werden, wobei es möglichst dicht an der Außenseite der Wand 13 verläuft, um möglichst intensiv von der Sonneneinstrahlung beaufschlagt zu werden und eine möglichst großen Anteil dieser Wärmeenergie in das Fluid zu überführen.

Die Leitungen 31 führen dann das Fluid zu einem (nicht dargestellten) Wärmetauscher, der die Wärme diesem Fluid entzieht und stattdessen beispielsweise der Warmwasserversorgung des Haushaltes in dem Gebäude 10 zur Verfügung stellt, beispielsweise für einen so genannten Schichtenlader, wie er auch bei Heizungsanlagen verwendet wird, die mit Dachsolaranlagenunterstützung betrieben werden.

In der **Figur 2** ist ein erfindungsgemäßer und in dem Verblendmauerwerk 15 eingesetzter Mauerstein 20 vergrößert dargestellt. Dieser Mauerstein 10 ist quaderförmig. Er besitzt also eine Oberseite 21 und eine Unterseite 22, die zugleich auch die beiden größten Seiten des Quaders darstellen und in dem eingebauten Zustand des Mauersteins 20 dessen obere Seite und untere Seite darstellen. Diese beiden Seiten sind während des Herstellungsvorgangs die vordere und die hintere Kante des Mauersteins 20 in einem extrudierten Materialstrang. Es ist also häufig der Fall, dass beispielsweise bei Ziegelsteinen senkrecht zur Oberseite 21 und Unterseite 22 durchgehende Ausnehmungen oder Löcher im Mauerstein 20 enthalten sind, um dessen Gewicht zu reduzieren. Diese Löcher können bei der Herstellung im Extrusionsverfahren vergleichsweise einfach eingebracht werden, da diese Löcher genau in der Förderrichtung entstehen und entstehen sollen und somit durch ein Mundstück in einer Extrusionsanlage erzielt werden können.

Die vier weiteren Seiten 23, 24, 25 und 26 sind während der Fertigung des Mauersteins 20 die Außenseiten des Stranges. Da der Mauerstein 20 quaderförmig ist, gibt es also zwei Längsseiten und zwei kürzere Schmalseiten. Die beiden Längsseiten bilden im eingebauten Zustand des Mauersteins 20 eine Kopfseite 23, die der Umgebung 12 zugewandt ist, und eine Rückseite 24, die sich dann im Inneren des Verblendmauerwerks 15 befindet. Die beiden Schmalseiten 25 und 26 werden auch als Läufer bezeichnet.

In der Oberseite 21 befindet sich erfindungsgemäß eine Ausnehmung 30. Diese Ausnehmung 30 ist als Rinne ausgestaltet. Sie verläuft parallel zur Kopfseite 23 und horizontal, also auch parallel zur Oberseite 23. Sie ragt mit einem U-förmigen Querschnitt in den Mauerstein 20 von der Oberseite 23 aus gesehen hinein.

Dabei kann bei der Herstellung der Form des Mundstückes schon darauf geachtet werden, dass es keine Überschneidungen dieser Rinne der Ausnehmung 30 mit den bereits erwähnten in Richtung des Fördervorganges laufenden weiteren Ausnehmungen im Mauerstein 20 gibt.

Legt man nun zwei Mauersteine 20 nebeneinander, so dass die beiden Kopfseiten 23 bündig in einer Ebene liegen und aneinander abschließen, so führen an den aneinandergrenzenden Schmalseiten 25 und 26 die Rinnen der Ausnehmungen 30 ebenfalls ineinander.

Betrachtet man nun eine komplette Reihe von derart nebeneinander liegenden Mauersteinen 20 in einem Verblendmauerwerksverband 15, so läuft eine derartige Rinne durch alle Ausnehmungen 30 der nebeneinander liegenden Mauersteine 20 hindurch.

Um eine sichere Führung für ein Fluid in dieser Rinne der Ausnehmung 30 zu gewährleisten, wird man eine separate Leitung 31 hineinlegen. Dabei können auch alle Maßnahmen berücksichtigt werden, um etwa ein Einfrieren des Fluides während der kalten Jahreszeit zu verhindern, etwa eine Zusammenstellung des Fluides aus Wasser mit entsprechenden Frostschutzmitteln und dergleichen.

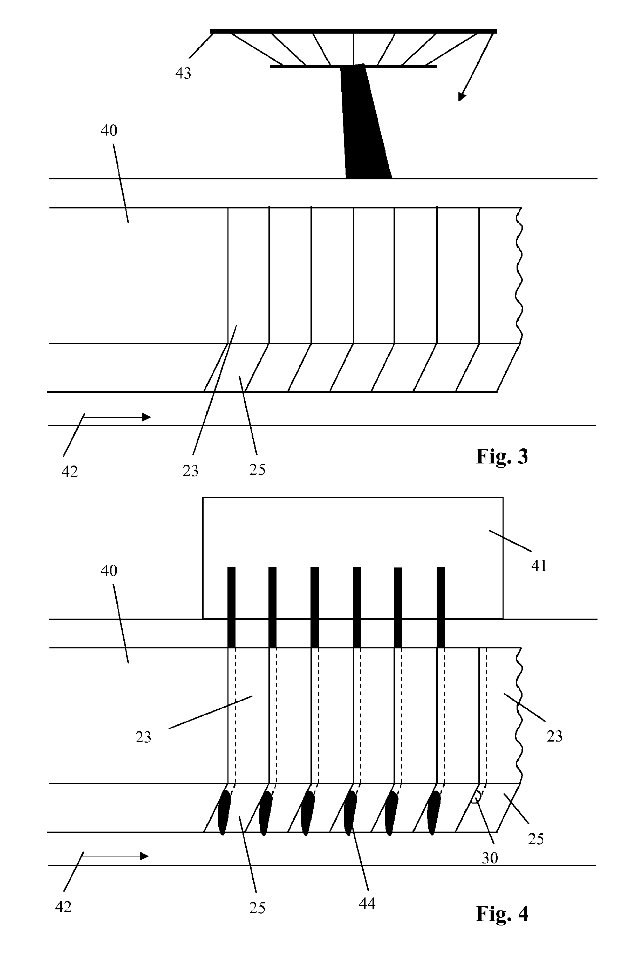

Das in der **Figur 3** schematisch dargestellte Verfahren zeigt einen Strang 40, der aus dem Mundstück einer Extrudiermaschine 41 hervortritt.

Dieser zunächst ungetrennte Strang aus einem für die Herstellung der erfindungsgemäßen Mauersteine geeigneten Material läuft auf ein Fließband 42 und wird wie auch bei der Herstellung von Mauersteinen sonst üblich in einem bestimmten Streckenabschnitt durch mehrere Trennschritte in bestimmte Abschnitte unterteilt. Dabei ist zunächst eine Trennung in größere Abschnitte vorgesehen, danach werden diese größeren Abschnitte entsprechend beschleunigt oder verzögert oder über Weichen voneinander getrennt, so dass danach eine Trennung durch so genannte Harfen 43 in einzelne Mauersteine 20 erfolgen kann.

Dieser Moment, an dem ohnehin eine definierte Geschwindigkeit oder auch ein Stillstand des gesamten Stranges oder eines bestimmten Abschnittes des extrudierten Stranges erfolgt, kann zugleich dazu genutzt werden, mittels so genannter Dorne 44 in das noch weiche Material des extrudierten Stranges einzudringen, und zwar so, dass das Material parallel zur Oberfläche der entstehenden Mauersteine 20 herausgeschnitten wird. Diese Oberseite 21 der Steine entsteht ja gleichzeitig im selben Schritt. Das Herausschneiden des überschüssigen Materials verhindert eine nicht beabsichtigte Verdichtung oder Verformung des benachbarten Materials im entstehenden Mauerstein 20.

Dieser kann dann in weiteren Bearbeitungsschritten wie üblich gebrannt und fertig gestellt werden.

Mit dieser dargestellten Herstellungsweise ist es möglich, mit vergleichsweise geringen Mehrkosten gegenüber der Herstellung herkömmlicher Mauersteine diesen zusätzlichen Nutzen zu erzielen. Das durch die Dorne herausgeschnittene Material kann unmittelbar der Extrudiereinrichtung als Rohmaterial wieder zugeführt und erneut verwendet werden, so dass weder zu entsorgendes Abfallmaterial entsteht noch Rohstoffe unnötig vergeudet werden. Der Herstellungsvorgang wird nicht oder kaum verzögert, so dass lediglich zusätzliche Aufwendungen für die benötigten Dorne und die entsprechenden Betätigungs- und Bewegungsmechanismen anfallen.

### Bezugszeichenliste

- 10: Gebäude
- 11: Innenraum
- 12: Umgebung
- 13: Wand
- 14: Hintermauerwerk
- 15: Verblendmauerwerk

- 20: Mauerstein
- 21: Oberseite
- 22: Unterseite
- 23: Kopfseite
- 24: Rückseite
- 25: Schmalseite bzw. Läufer
- 26: Schmalseite bzw. Läufer

- 30: Ausnehmung
- 31: Leitungen

- 40: Strang
- 41: Extrudiermaschine
- 42: Fließband
- 43: Harfe
- 44: Dorn

## Patentansprüche

1. Außenwand eines Gebäudes (10),
mit einem Mauerwerksverband,
**welcher** Mauerwerksverband aus überwiegend identisch ausgebildeten Mauersteinen (20) mit jeweils einer Oberseite (21), mit jeweils einer Unterseite (22), mit jeweils zwei Schmalseiten (25, 26), mit jeweils einer Rückseite (24), und mit jeweils einer Kopfseite (23) aufgebaut ist,
**wobei** ein Teil der Mauersteine (20) jeweils eine Ausnehmung (30) in Form einer Rinne besitzt, die parallel zur Kopfseite (23) horizontal in der Oberseite (21) des Mauersteins (20) ausgebildet ist,
**wobei** nebeneinanderliegende Mauersteine (20) des Mauerwerksverbandes so aufeinander ausgerichtet sind, dass die Ausnehmungen (30) in Form der Rinnen aneinander anschließen,
**wobei** in den überwiegend identisch ausgebildeten Mauersteinen (20) Rohrleitungen (31) in die aufeinander ausgerichteten Rinnen der Ausnehmungen (30) nebeneinanderliegender Mauersteine (20) eingelegt sind,
**wobei** in den Rohrleitungen (31) ein Fluid strömen kann,
**dadurch gekennzeichnet,**
**dass** die Außenwand der Sonneneinstrahlung zugewandt ist,
**dass** die Mauersteine (20) Verblendmauersteine sind,
**dass** eine Wärmetauscheinrichtung vorgesehen ist, und
**dass** die Rohrleitungen (31) in den Ausnehmungen (30) der Mauersteine (20) so miteinander verbunden sind, dass das in ihnen strömende Fluid der Wärmetauscheinrichtung zugeführt wird.

2. Außenwand eines Gebäudes nach Anspruch 1,
**dadurch gekennzeichnet,**
**dass** in übereinanderliegenden Reihen von Mauersteinen (20) des Mauerwerksverbandes jeweils Rohrleitungen (31) in den Rinnen der Ausnehmungen (30) eingelegt sind, und
**dass** das in den mehreren in übereinanderliegenden Reihen von Mauersteinen (20) angeordneten Rohrleitungen (31) strömende Fluid einer gemeinsamen Wärmetauscheinrichtung zugeführt wird.

3. Außenwand eines Gebäudes nach Anspruch 1 oder 2,
**dadurch gekennzeichnet,**
**dass** die in den mehreren in übereinanderliegenden Reihen von Mauersteinen (20) angeordneten Rohrleitungen (31) mäanderförmig miteinander verbunden sind.

4. Außenwand eines Gebäudes nach einem der vorstehenden Ansprüche,
**dadurch gekennzeichnet,**
**dass** die Rinne der Ausnehmung (30) benachbart zur Kopfseite (23) und weiter entfernt von der Rückseite (24) von einer Schmalseite (25) zur anderen Schmalseite (26) verläuft.

5. Außenwand eines Gebäudes nach einem der vorstehenden Ansprüche,
**dadurch gekennzeichnet,**
**dass** die Rinne der Ausnehmung (30) benachbart zur Kopfseite (23) so angeordnet ist, dass die Rinne und insbesondere die in der Rinne angeordnete Rohrleitung (31) durch die Kopfseite (23) und das Material zwischen der Kopfseite (23) und der Ausnehmung (30) gegenüber der Umgebung (12) außerhalb der Außenwand abgeschirmt ist.

6. Außenwand eines Gebäudes nach einem der vorstehenden Ansprüche,
**dadurch gekennzeichnet,**
**dass** die Rinne der Ausnehmung (30) Abmessungen aufweist, bei denen die Tiefe und die Breite senkrecht zur Kopfseite (23) gleich groß sind.

7. Außenwand eines Gebäudes nach einem der vorstehenden Ansprüche,
**dadurch gekennzeichnet,**
**dass** die Rinne der Ausnehmung (30) einen U-förmigen Querschnitt aufweist.

8. Außenwand eines Gebäudes nach einem der vorstehenden Ansprüche,
**dadurch gekennzeichnet,**
**dass** die Mauersteine (20) des Mauerwerksverbandes Ziegelsteine sind.

9. Außenwand eines Gebäudes nach einem der vorstehenden Ansprüche,
**dadurch gekennzeichnet,**
**dass** das Fluid in den Rohrleitungen (31) in den Rinnen der Ausnehmungen (30) eine frostgeschützte Flüssigkeit ist.

10. Verfahren zur Herstellung eines Mauersteins (20) für eine Außenwand eines Gebäudes nach einem der vorstehenden Ansprüche,
**dadurch gekennzeichnet,**
**dass** in einer Extrusionsanlage durch Strangpressung ein Strang eines Werkstoffes zur Herstellung von Mauersteinen (20) extrudiert wird,
**dass** in den Strang im rechten Winkel zur Förderrichtung des Stranges nach dem Austreten aus einem Mundstück durchgehende Ausnehmungen (30) eingeformt werden, und
**dass** der Strang des für die Herstellung von Mauersteinen (20) verwendeten Werkstoffes vor oder nach dem Einfügen der Ausnehmungen senkrecht zur Förderrichtung benachbart zu den Ausnehmungen (30) geschnitten wird.

11. Verfahren nach Anspruch 10,
**dadurch gekennzeichnet,**
**dass** die in den Strang nach dem Austreten aus einem Mundstück eingeformten Ausnehmungen (30) in horizontaler Richtung eingeformt werden.

12. Verfahren nach Anspruch 10 oder 11,
**dadurch gekennzeichnet,**
**dass** Dorne vorgesehen sind, die von der Seite in die noch weiche Werkstoffmasse der zukünftigen Mauersteine (20) eintreten und so die zukünftige Ausnehmung (30) dabei herausschneiden.

13. Verfahren nach Anspruch 12,
**dadurch gekennzeichnet,**
**dass** die Dorne in der Nachbarschaft von Harfen angeordnet sind, und dass das senkrechte Schneiden durch die Harfen erst nach dem Ausformen der Ausnehmungen (30) durch die Dorne während eines gemeinsamen Bearbeitungsschrittes erfolgt, bevorzugt unmittelbar aufeinander folgend während eines gemeinsamen Bearbeitungsschrittes.

14. Verfahren nach Anspruch 13,
**dadurch gekennzeichnet,**
**dass** die Dorne in der Nachbarschaft von Harfen angeordnet sind, und das senkrechte Schneiden und das bevorzugt horizontale Ausformen der Rinnen durch die Dorne während eines gemeinsamen Bearbeitungsschrittes erfolgt, und
**dass** der gemeinsame Verfahrensschritt dabei ein gemeinsames Anhalten oder Verzögern einer Vorwärtsbewegung des Stranges ist.
